# EUROPÄISCHE PATENTSCHRIFT

(11) **EP 1 832 781 B1**
(45) Veröffentlichungstag und Bekanntmachung des Hinweises auf die Patenterteilung: **31.03.2010**
(21) Anmeldenummer: 07003945.8
(22) Anmeldetag: 27.02.2007
(51) Int. Cl.: F16F 9/512, F16F 9/06, F16F 9/49

(54) **Schwingungsdämpfer**
Vibration absorber
Amortisseur d'oscillations

(30) Priorität: 11.03.2006 DE 102006011351
(43) Veröffentlichungstag der Anmeldung: 12.09.2007
(73) Patentinhaber: ZF Friedrichshafen AG, 88046 Friedrichshafen (DE)
(72) Erfinder: Krawczyk, Anton, 51570 Windeck (DE)

(56) Entgegenhaltungen:
- DE-A1- 2 751 488
- DE-B3-102004 015 448
- DE-C1- 10 041 199
- JP-A- 10 339 345
- US-A- 3 447 644

## Beschreibung

Die Erfindung betrifft einen Schwingungsdämpfer gemäß dem Oberbegriff von Patentanspruch 1.

Aus der DE 100 41 199 C1 ist ein Schwingungsdämpfer mit einem Zylinder bekannt, in dem eine Kolbenstange axial beweglich geführt ist, wobei an der Kolbenstange ein erster Kolben ortsfest und ein zweiter Kolben gegen eine Federkraft axial verschiebbar gelagert ist. Die beiden Kolben unterteilen den Zylinder in einen kolbenstangenseitigen und einen kolbenstangenfernen Arbeitsraum und einen Arbeitsraum zwischen den beiden Kolben. Ventilbestückte Durchlassöffnungen steuern eine Verbindung zwischen den Arbeitsräumen. Der zweite Kolben weist auf beiden Seiten jeweils mindestens eine Rückstellfeder auf und ist in zwei Richtungen gegen die Rückstellfedern axial verschiebbar gelagert.

Diese Schwingungsdämpferbauart führt bei vielen Fahrzeugen zu einem sehr komfortablen Fahrverhalten. Es gibt jedoch auch Anwendungsfälle, bei denen die Rückstellfedern zu geringe Kräfte erzeugen, so dass die Rückstellfedern jeweils auch von zwei ineinander angeordneten Federsätzen gebildet wurden. Die Federsätze lassen sich jedoch nur schwer montieren und benötigen einen größeren radialen Bauraum. Federn mit einer progressiven Federkennlinie sind sehr teuer.

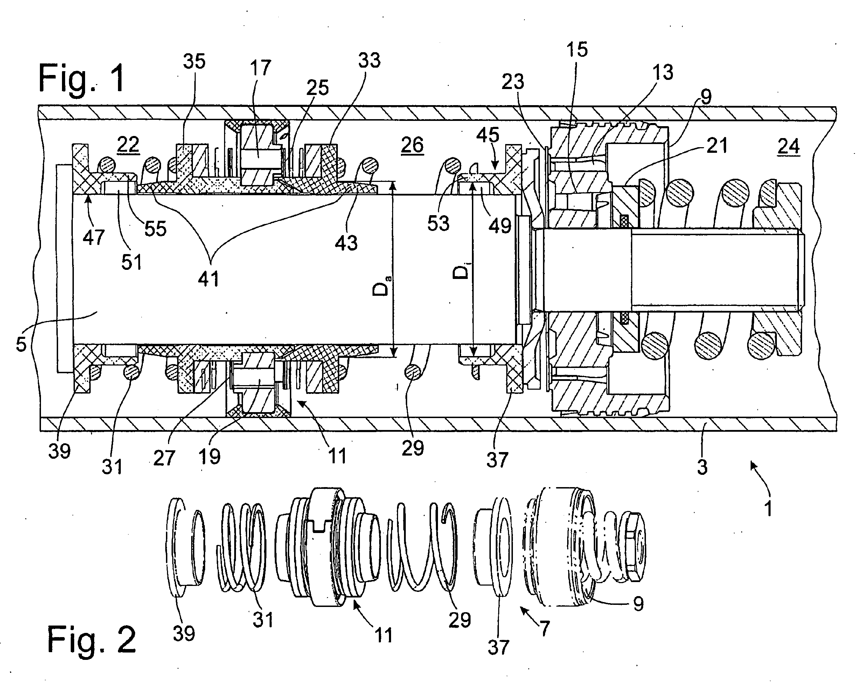

Die DE 27 51 488 A1 beschreibt einen Schwingungsdämpfer mit einem an der Kolbenstange ortsfesten Kolben und einem zwischen zwei Schraubenfedern axial beweglichen Kolben. Der Kolben verfügt über in der Ausführungsform nach Fig. 2 und 3 über Drosselöffnungen und bildet mit der Kolbenstange einen Ringspalt. An der Kolbenstange ist für eine Rückstellfeder ein Federteller angeordnet, der einen Anschlagtopf aufweist.

Aufgabe der vorliegenden Erfindung ist es, einen Kennlinienverlauf für den axial beweglichen Kolben zu erreichen, bei dem im Vergleich zum Stand der Technik ein deutlich höheres Kraftniveau zur Abstützung des Kolbens zur Verfügung steht

Erfindungsgemäß wird die Aufgabe durch die Merkmale des Patentanspruchs 1 gelöst.

Zusätzlich zu den Stützkräften der Rückstellfeder steht die Drosselkraft des Druckanschlags zur Verfügung, die auf vergleichsweise sehr kleinem Bauraum zur Verfügung steht. Für die Wirkung des Druckanschlags ist es unerheblich an welchem der beiden relativ zueinander beweglichen Federteller für eine Rückstellfeder die Verdrängerhülse oder der Anschlagtopf ausgeführt ist. Nach radial innen wird der Verdrängerraum des Anschlagtopfes radial von der Wandung und der Mantelfläche der Kolbenstange begrenzt. Dadurch kann der Anschlagtopf eine sehr einfache Körperkontur aufweisen.

Um extreme Spannungsspitzen in der Rückstellfeder zu vermeiden, kommt die Verdrängerhülse axial im Anschlagtopf zur Anlage, wobei die Rückstellfeder noch einen Restfederweg aufweist.

Dabei ist an dem axial beweglichen Kolben ein Federteller für die Rückstellfeder angeordnet, der auf der dem axial beweglichen Kolben abgewandten Seite als Verdrängerhülse oder Anschlagtopf ausgeführt ist.

Gemäß einem weiteren vorteilhaften Unteranspruch steigt der Wirkquerschnitt der Verdrängerhülse im Anschlagtopf zumindest auf einer Hublänge an. Diesen Effekt kann man z. B. dadurch erzielen, dass der Verdränger eine konische Kontur aufweist, über den bei einer Ausfahrbewegung der Verdrängerhülse Dämpfmedium in den Anschlagtopf nachströmen kann.

Um einen Unterdruck im Anschlagtopf zu vermeiden besteht unabhängig von der Einfahrtiefe der Verdrängerhülse im Anschlagtopf zwischen einer Mantelfläche der Verdrängerhülse und einer Wandung des Anschlagtopfes ein Restdämpfquerschnitt. Anschlaggeräusche treten dabei nicht auf, da mindestens eines der Bauteile Verdrängerhülse oder Anschlagtopf aus einem Kunststoff besteht.

Anhand der folgenden Figurenbeschreibung soll die Erfindung näher erläutert werden.

Es zeigt:
- Fig. 1: Schnittzeichnung durch die Kolbenanordnung auf der Kolbenstange
- Fig. 2: Explosionszeichnung zur Fig. 1

Die Figur 1 und 2 zeigen in der Zusammenschau einen Ausschnitt aus einem Schwingungsdämpfer 1, in dessen Zylinder 3 eine Kolbenstange 5 axial beweglich geführt ist. Die Kolbenstange 5 wirkt mit einer Kolbenstangenanordnung 7 zusammen, die u. a. einen ersten Kolben 9 aufweist, der auf einem Kolbenstangenzapfen fixiert ist. Des Weiteren umfasst die Kolbenanordnung 7 einen auf der Kolbenstange in Grenzen axial verschiebbar gelagerten zweiten Kolben 11. Sowohl der erste wie auch der zweite Kolben 9; 11 sind mit Durchströmungskanälen 13; 15; 17; 19 ausgeführt, die jeweils an den Austrittsseiten mit mindestens einer Ventilscheibe 21; 23; 25; 27 bestückt sind. Die Kolbenanordnung 7 unterteilt den mit einem Dämpfmedium gefüllten Zylinder 3 in einen kolbenstangenseitigen Arbeitsraum 22, einen kolbenstangenfernen Arbeitsraum 24 und einen Arbeitsraum 26 zwischen den beiden Kolben 9; 11

Der axial bewegliche Kolben 11 wird beidseitig von mindestens einer Rückstellfeder 29; 31 bei Kolbenstangenstillstand in eine Ausgangsstellung vorgespannt. Beide Rückstellfedern 29; 31 stützen sich endseitig an einem Federteller 33; 35 am axial beweglichen Kolben 11 und einem zur Kolbenstange ortsfesten Federteller 37; 39 ab

Die Kolbenanordnung 7 verfügt für beide Bewegungsrichtungen des axial verschiebbaren Kolbens 11 über einen Druckanschlag, der von einer Verdrängerhülse 41; 43 gebildet wird, die in einen Hubanschlagtopf 45; 47 einfahren kann. In diesem Ausführungsbeispiel ist an den Federtellern 33; 35 für die Rückstellfedern auf der dem Kolben 11 abgewandten Seite jeweils eine Verdrängerhülse 41; 43 angeordnet. An den ortsfest zu Kolbenstange ausgeführten Federtellern 37; 39 ist jeweils ein Anschlagtopf 45; 47; fixiert. Die Verdrängerräume der 49; 51 werden nach radial außen von einer Wandung 53; 55 des Federtellers und nach radial innen von der Kolbenstange 5 begrenzt.

Die Verdrängerhülse 41; 43 und die Anschlagtopfe sind innerhalb eines von den Rückstellfedern 29; 31 begrenzten Ringraums angeordnet. Der maximal wirksame Außendurchmesser Da der Verdrängerhülse 41; 43 ist um eine definiertes Maß kleiner als der Innendurchmesser Di des Anschlagtopfes 45; 47, so dass unabhängig von der Einfahrtiefe der Verdrängerhülse 41; 43 in den Anschlagtopf 45; 47 zwischen der Mantelfläche der Verdrängerhülse und der Wandung 53; 55 des Anschlagtopfes noch ein Restdrosselquerschnitt besteht. Der Wirkquerschnitt der Verdrängerhülse kann z. B. durch eine Konusform zumindest auf einer Hublänge ansteigen.

Die Verdrängerhülse 41; 43 kann axial im Anschlagtopf 45; 47 zur Anlage kommen, wobei die Rückstellfeder 29; 31 noch einen Restfederweg aufweist. Anschlaggeräusche treten nicht auf, da mindestens eines der Bauteile Verdrängerhülse oder Anschlagtopf aus einem Kunststoff bestehen.

Die hydraulische Wirkungsweise der Kolbenanordnung ohne Druckanschlag ist bereits in der DE 100 41 199 C1 beschrieben, wobei die gesamte Figurenbeschreibung als Teil der vorliegenden Beschreibung anzusehen ist.

Die Dämpfkraftkennlinie der Kolbenanordnung wird dahingehend geändert, dass durch den Druckanschlag auch bei größeren Kolbenstangengeschwindigkeiten und damit zusammenhängenden Drücken am Kolben noch eine axiale Verschiebung des Kolbens 11 möglich ist. Die Druckkräfte in den Verdrängerräumen 49; 51 unterstützen die funktional parallel wirkenden Rückstellfedern 29; 31, so dass die Endlage des zweiten Kolbens 11 erst bei größeren Kolbenstangengeschwindigkeiten und folglich auch dann erst die maximale Dämpfkraft erreicht wird. Bei einer Umkehrung der Bewegungsrichtung der Kolbenanordnung 7 kann der axial verschiebbare Kolben 11 mit seiner Verdrängerhülse 41; 43 allein durch die Kraft der Rückstellfeder wieder in die neutrale Ausgangsstellung bewegt werden, da der besagte Restdrosselquerschnitt ein Nachströmen von Dämpfmedium in die Verdrängerräume 49; 51 ermöglicht.

## Patentansprüche

1. Schwingungsdämpfer (1) , umfassend einen Zylinder (3), in dem eine Kolbenstange (5) axial beweglich geführt ist, wobei die Kolbenstange (5) mit einer Kolbenanordnung (7) zusammenwirkt, die einen ersten ortsfesten Kolben (9) und mindestens einen weiteren Kolben (11) aufweist, der gegen eine Federkraft mindestens einer Rückstellfeder (29; 31) auf der Kolbenstange (5) axial verschiebbar gelagert ist, wobei der Zylinder (3) von dem ortsfesten und dem mindestens einen axial verschiebbaren Kolben (9; 11) in einen kolbenstangenseitigen Arbeitsraum (22), einen kolbenstangenfernen Arbeitsraum (24) und mindesten einen Arbeitsraum (26) zwischen den Kolben (9; 11) unterteilt wird, wobei ventilbestückte Durchlassöffnungen (13; 15; 17; 19) eine Verbindung zwischen den Arbeitsräumen (22; 24; 26) steuern, wobei die Axialbewegung des mindestens einen axial verschiebbaren Kolbens (11) von einem hydraulischen Druckanschlag (41; 43; 45; 47) begrenzt wird, und wobei ortsfest zur Kolbenstange (5) für die Rückstellfeder (29; 31) des axial beweglichen Kolbens (11) mindestens ein Federteller (37; 39) angeordnet ist, der in Richtung des axial beweglichen Kolbens (11) mit einer Verdrängerhülse (41; 43) oder einem Anschlagtopf (45; 47) ausgeführt ist, **dadurch gekennzeichnet,**
**dass** der Druckanschlag von einer Verdrängerhülse (41; 43) gebildet wird, die in einen Anschlagtopf (45; 47) einfahren kann, wobei die Verdrängerhülse (41; 43) radial innerhalb eines von der Rückstellfeder (29; 31) begrenzten Ringraums ausgeführt ist und axial im Anschlagtopf (45; 47) zur Anlage kommt, wobei die Rückstellfeder (29; 31) noch einen Restfederweg aufweist.

2. Schwingungsdämpfer nach Anspruch 1,
**dadurch gekennzeichnet,**
**dass** an dem axial beweglichen Kolben (11) ein Federteller (33; 35) für die Rückstellfeder (29; 31) angeordnet ist, der auf der dem axial beweglichen Kolben (11) abgewandten Seite als Verdrängerhülse (41; 43) oder Anschlagtopf (45; 47) ausgeführt ist.

3. Schwingungsdämpfer nach Anspruch 1,
**dadurch gekennzeichnet,**
**dass** der Wirkquerschnitt der Verdrängerhülse (41; 43) im Anschlagtopf (45; 47) zumindest auf einer Hublänge ansteigt.

4. Schwingungsdämpfer nach Anspruch 1,
**dadurch gekennzeichnet,**
**dass** unabhängig von der Einfahrtiefe der Verdrängerhülse (41; 43) im Anschlagtopf (45; 47) zwischen einer Mantelfläche oder Verdrängerhülse (41; 43) und einer Wandung (53; 55) des Anschlagtopfes (45; 47) ein Restdämpfquerschnitt besteht.

5. Schwingungsdämpfer nach Anspruch 1,
**dadurch gekennzeichnet,**
**dass** mindestens eines der Bauteile Verdrängerhülse (41; 43) oder Anschlagtopf (45; 47) aus einem Kunststoff besteht.

6. Schwingungsdämpfer nach Anspruch 1,
**dadurch gekennzeichnet,**
**dass** der Verdrängerraum (49; 51) des Anschlagtopfes (45; 47) radial von der Wandung (51; 53) und der Mantelfläche der Kolbenstange (5) begrenzt wird.

## Claims

1. Vibration damper (1), comprising a cylinder (3) in which a piston rod (5) is guided axially movably, the piston rod (5) cooperating with a piston arrangement (7) which has a first fixed piston (9) and at least one further piston (11) which is mounted axially displaceably on the piston rod (5) counter to a spring force of at least one restoring spring (29; 31), the cylinder (3) being subdivided by the fixed and the at least one axially displaceable piston (9; 11) into a piston-rod-side working space (22), a piston-rod-remote working space (24) and at least one working space (26) between the pistons (9; 11), valve-equipped passage orifices (13; 15; 17; 19) controlling a connection between the working spaces (22; 24; 26), the axial movement of the at least one axially displaceable piston (11) being limited by a hydraulic pressure stop (41; 43; 45; 47), and at least one spring plate (37; 39) being arranged fixedly with respect to the piston rod (5) for the restoring spring (29; 31) of the axially movable piston (11), which spring plate is designed, in the direction of the axially movable piston (11), with a displacement sleeve (41; 43) or with a stop pot (45; 47), **characterized in that** the pressure stop is formed by a displacement sleeve (41; 43) which can move into a stop pot (45; 47), the displacement sleeve (41; 43) being formed radially within an annular space delimited by the restoring spring (29; 31) and coming to bear axially in the stop pot (45; 47), the restoring spring (29; 31) also having a residual spring excursion.

2. Vibration damper according to Claim 1, **characterized in that** a spring plate (33; 35) for the restoring spring (29; 31) is arranged on the axially movable piston (11) and is designed, on the side facing away from the axially movable piston (11), as a displacement sleeve (41; 43) or stop pot (45; 47).

3. Vibration damper according to Claim 1, **characterized in that** the effective cross section of the displacement sleeve (41; 43) in the stop pot (45; 47) increases at least to a stroke length.

4. Vibration damper according to Claim 1, **characterized in that**, independently of the move-in depth of the displacement sleeve (41; 43) in the stop pot (45; 47), a residual damping cross section is present between a surface area of the displacement sleeve (41; 43) and a wall (53; 55) of the stop pot (45; 47) .

5. Vibration damper according to Claim 1, **characterized in that** at least one of the components, namely the displacement sleeve (41; 43) or stop pot (45; 47), consists of a plastic.

6. Vibration damper according to Claim 1, **characterized in that** the displacement space (49; 51) of the stop pot (45; 47) is delimited radially by the wall (51; 53) and the surface area of the piston rod (5).

## Revendications

1. Amortisseur d'oscillations (1), comprenant un cylindre (3), dans lequel est guidée, de manière déplaçable axialement, une tige de piston (5), la tige de piston (5) coopérant avec un agencement de piston (7) qui présente un premier piston fixe (9) et au moins un autre piston (11), qui est monté de manière déplaçable axialement à l'encontre d'une force de ressort d'au moins un ressort de rappel (29 ; 31) sur la tige de piston (5), le cylindre (3) étant divisé par le piston fixe et l'au moins un piston déplaçable axialement (9 ; 11) en un espace de travail (22) du côté de la tige de piston, un espace de travail (24) éloigné de la tige de piston, et au moins un espace de travail (26) entre les pistons (9 ; 11), des ouvertures de passage (13 ; 15 ; 17 ; 19) munies de soupapes commandant une connexion entre les espaces de travail (22 ; 24 ; 26), le déplacement axial de l'au moins un piston (11) déplaçable axialement étant limité par une butée de pression hydraulique (41 ; 43 ; 45 ; 47), et au moins un plateau de ressort (37 ; 39) étant disposé fixement par rapport à la tige de piston (5) pour le ressort de rappel (29 ; 31) du piston déplaçable axialement (11) , lequel est réalisé dans la direction du piston déplaçable axialement (11) avec une douille de déplacement (41 ; 43) ou un pot de butée (45 ; 47),
**caractérisé en ce**
la butée de pression est formée par une douille de déplacement (41 ; 43) capable de s'enfoncer dans un pot de butée (45 ; 47), la douille de déplacement (41 ; 43) étant réalisée radialement à l'intérieur d'un espace annulaire délimité par le ressort de rappel (29 ; 31) et verant en appui axialement dans le pot de butée (45 ; 47), le ressort de rappel (29 ; 31) présentant en outre une course de ressort résiduelle.

2. Amortisseur d'oscillations selon la revendication 1,
**caractérisé en ce**
**qu'**un plateau de ressort (33 ; 35) pour le ressort de rappel (29 ; 31) est disposé sur le piston déplaçable axialement (11), lequel est réalisé du côté opposé au piston déplaçable axialement (11) sous forme de douille de déplacement (41 ; 43) ou de pot de butée (45 ; 47).

3. Amortisseur d'oscillations selon la revendication 1,
**caractérisé en ce que**
la section transversale efficace de la douille de déplacement (41 ; 43) dans le pot de butée (45 ; 47) augmente au moins à une longueur de course.

4. Amortisseur d'oscillations selon la revendication 1,
**caractérisé en ce que**
qu'indépendamment de la profondeur d'enfoncement de la douille de déplacement (41 ; 43) dans le pot de butée (45 ; 47), il subsiste une section transversale d'amortissement résiduelle entre une surface d'enveloppe de la douille de déplacement (41 ; 43) et une paroi (53 ; 55) du pot de butée (45 ; 47).

5. Amortisseur d'oscillations selon la revendication 1,
**caractérisé en ce**
**qu'**au moins l'un des composants douille de déplacement (41 ; 43) ou pot de butée (45 ; 47) se compose d'une matière plastique.

6. Amortisseur d'oscillations selon la revendication 1,
**caractérisé en ce que**
l'espace de déplacement (49 ; 51) du pot de butée (45 ; 47) est limité radialement par la paroi (51 ; 53) et la surface d'enveloppe de la tige de piston (5).
